(19) Europäisches Patentamt
European Patent Office
Office européen des brevets

(11) **EP 2 032 654 B1**

(12) **FASCICULE DE BREVET EUROPEEN**

(45) Date de publication et mention de la délivrance du brevet:
**25.03.2020 Bulletin 2020/13**

(21) Numéro de dépôt: **07786869.3**

(22) Date de dépôt: **27.06.2007**

(51) Int Cl.:
***C08L 83/04*** (2006.01) ***C09D 183/04*** (2006.01)

(86) Numéro de dépôt international:
**PCT/EP2007/056432**

(87) Numéro de publication internationale:
**WO 2008/000771 (03.01.2008 Gazette 2008/01)**

(54) **COMPOSITION SILICONE RETICULABLE POUR LA REALISATION DE REVETEMENTS ANTI-ADHERENTS POUR SUPPORTS SOUPLES ET ADDITIF PROMOTEUR D'ACCROCHAGE CONTENU DANS CETTE COMPOSITION**

NETZFÖRMIG ANLEGBARER SILIKONVERBUNDSTOFF ZUR HERSTELLUNG VON ANTIHAFTBESCHICHTUNGEN FÜR FLEXIBLE UNTERLAGEN UND IN DIESEM VERBUNDSTOFF ENTHALTENER ZUSATZ ALS HAFTVERMITTLER

SILICONE COMPOSITE THAT CAN BE RETICULATED FOR PRODUCING ANTI-ADHESIVE COATINGS FOR FLEXIBLE SUPPORTS AND ADDITIVE TO PROMOTE ADHESION CONTAINED IN THIS COMPOSITE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **29.06.2006 FR 0652699**

(43) Date de publication de la demande:
**11.03.2009 Bulletin 2009/11**

(73) Titulaire: **ELKEM SILICONES France SAS**
**69003 Lyon (FR)**

(72) Inventeurs:
- **WHITE, John**
  **69380 Chessy Les Mines (FR)**
- **FEDER, Michel**
  **69100 Villeurbanne (FR)**
- **POUCHELON, Alain**
  **69330 Meyzieu (FR)**
- **MAADADI, Yassine**
  **69150 Decines (FR)**
- **GAMBUT-GAREL, Lucile**
  **69003 Lyon (FR)**

(74) Mandataire: **Plasseraud IP**
**66, rue de la Chaussée d'Antin**
**75440 Paris Cedex 09 (FR)**

(56) Documents cités:
**EP-A1- 0 556 023**
**EP-A2- 0 574 264**
**EP-A2- 0 764 702**
**EP-A2- 1 108 764**
**WO-A1-98/28376**
**US-A- 4 822 687**
**US-A- 5 166 293**
**US-A1- 2004 161 618**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 032 654 B1

Printed by Jouve, 75001 PARIS (FR)

## Description

Le domaine de l'invention est celui des compositions silicones réticulables ou réticulées, susceptibles d'être utilisées, notamment, pour former un revêtement ou film hydrofuge et anti-adhérent pour supports souples par exemple en papier ou analogues et sous forme de films en polymère naturel ou synthétique.

Ces compositions silicones anti-adhérentes, durcissables sont appliquées sur de tels supports, de manière à faciliter l'enlèvement de matières adhésives contrecollées de manière réversible sur ces supports.

Plus précisément, l'invention se rapporte aux compositions silicones du type de celles comprenant :

- ► des polyorganosiloxanes (POS) fonctionnalisés porteurs, sur une même molécule ou non de motifs Si-H$[(M)_{a'\geq 0}(M^H)_{b'\geq 0}(D^H)_{c'\geq 0}(D)_{d'\geq 0}]$ et Si-alcényle, de préférence Si-vinyle(Vi)$[(M)_{a''\geq 0}(M^{Vi})_{b''\geq 0}(D^{Vi})_{c''\geq 0}(D)_{d''\geq 0}]$; les motifs Si-H étant susceptibles de réagir avec les motifs Si-alcényle par réaction d'addition ; *les définitions des symboles utilisés ci-avant étant les suivantes: M: ($R_3SiO_{1/2}$)* ; *D: ($R_2SiO_{2/2}$) ; $M^H$ ou M': ($R_2HSiO_{1/2}$) ; $D^H$ ou D': ($RHSiO_{2/2}$) ; $M^{Vi}$ : ($R_2SiO_{1/2}$) ; $D^{Vi}$ : ($RViSiO_{2/2}$); T: ($RSiO_{3/2}$) ; Q: ($SiO_{4/2}$) ; Vi= vinyle; R = méthyle ou autre groupe hydrocarboné différent de -O-Si≡, par exemple alkyle ou aryle*;
- ► un catalyseur métallique approprié de préférence platinique;
- ► éventuellement un régulateur de prise (ralentisseur, inhibiteur);
- ► éventuellement au moins un système modulateur d'adhérence, par exemple à base de résine silicone comprenant des motifs siloxyles Q et/ou T;
- ► éventuellement d'autres additifs (charges, accélérateurs, inhibiteurs, pigments, tensioactifs, auxiliaire opératoire "*processing aid*" (par exemple additif antibrouillard "*antimisting*".

L'invention concerne également la préparation de ce type de compositions silicones.

L'invention concerne également les procédés de réalisation de revêtements silicone e.g. hydrofuges et/ou anti-adhérents pour supports souples (e.g. papier ou films polymère), à partir des compositions susvisées.

Ces compositions silicones liquides sont appliquées sur les films supports dans des dispositifs industriels d'enduction comportant des cylindres fonctionnant à très grande vitesse (par exemple 600 m/min). Il est clair que dans ces procédures d'enduction à très grande vitesse, la viscosité de la composition silicone liquide d'enduction doit être minutieusement adaptée aux conditions opératoires d'enduction.

En pratique, le taux de dépôt de silicone anti-adhérent est compris entre 0,1 et 2 de préférence 0,3 et 1 $g/m^2$, ce qui correspond à des épaisseurs de l'ordre du micromètre.

Une fois appliquée sur le support souple, la composition silicone réticule pour former un revêtement solide en silicone (e.g. élastomère) anti-adhérent et/ou hydrofuge.

Compte tenu des cadences industrielles d'enduction à très haute vitesse, la cinétique de réticulation doit être extrêmement rapide pour conduire à une réticulation correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du revêtement silicone anti-adhérent peut notamment se faire au travers du dosage des composés extractibles non réticulés, dont la quantité doit être la plus réduite possible. Par exemple, le taux d'extractibles est préférablement inférieur à 5%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off', qui consiste à frotter la surface du revêtement avec le doigt et à mesurer le nombre de passages successifs avant dégradation du revêtement.

Il importe également que ces compositions silicones d'enduction, réticulables par hydrosilylation e.g. Si-H / Si-Vi, aient une durée de vie à température ambiante la plus longue possible, lorsqu'elles sont sous forme de bain d'enduction dans les machines industrielles d'enduction.

Les supports souples revêtus d'un film silicone anti-adhérent peuvent être par exemple:

- un ruban adhésif dont la face interne est enduite d'une couche d'adhésif sensible à la pression et dont la face externe comporte le revêtement silicone anti-adhérent ;
- ou un papier ou un film polymère de protection de la face adhésive d'un élément autocollant ou adhésif sensible à la pression ;
- ou un film polymère du type polyoléfine (polychlorure de vinyle (PVC), PolyPropylène ou Polyéthylène) ou de type polyester (PolyEthylèneTéréphtalate -PET-).

Dans le cadre de la présente invention, on s'intéresse notamment mais non limitativement aux compositions silicones liquides d'enduction de supports souples polymères (polyester e.g. en PET). En effet, l'un des avantages des films PET tient à leur très faible épaisseur (20$\mu$m) qui permet de limiter significativement l'encombrement des rouleaux de film.
De plus, pour des raisons évidentes de sécurité de manipulation et de toxicité, on vise dans la présente invention, par exemple des compositions silicone avantageusement sans solvant.
Au-delà de cet aspect, il est préférable que, d'un point de vue économique, ces compositions silicone d'enduction avantageusement sans solvant, en particulier pour des supports en polymère, notamment en polyester, e.g. en PET, puissent être utilisées sur des équipements industriels standard d'enduction adaptés à des supports souples en papier.
Cela suppose que lesdites compositions aient une viscosité relativement basse (par exemple inférieure ou égale à 1000 mPa.s) pour faciliter leur manipulation, pour avoir une bonne qualité d'enduction et pour réduire le problème de formation de brouillard ("misting") qui apparaît aux très grandes vitesses d'enduction industrielles.
Une autre contrainte à prendre en compte pour la formulation des compositions silicone liquides d'enduction est que le coefficient de friction du revêtement d'élastomère silicone réticulé soit contrôlable, de manière à faciliter les opérations d'enroulement/déroulement des supports souples en polymère (notamment en polyester tel que le PET), utiles comme "liners" pour étiquettes.
Il est important pour cette application que le revêtement silicone élastomère ne nuise ni à l'aspect lisse, ni à la transparence, ni aux propriétés mécaniques du support. L'aspect lisse et les propriétés mécaniques sont nécessaires pour un échenillage de précision à très grande vitesse. La transparence est souhaitable pour l'inspection de la régularité du film à très grande vitesse, à l'aide de détecteurs optiques.
Dans un revêtement anti-adhérent, le contrôle de la force de décollement est important. Avantageusement, ce contrôle doit être effectif à basse et à haute vitesse. L'équilibre entre les forces de décollement à basse vitesse et les forces de décollement à haute vitesse est appelé communément le profil d'anti-adhérence.
Au-delà des propriétés évoquées ci-dessus pour tous supports, et en particulier les supports polymère (notamment polyester, e.g. PET), il convient avant tout que l'adhérence ou l'accrochage du revêtement silicone sur le support (traduite par la résistance à l'abrasion "rub-off") soit optimale et stable dans le temps, ceci même en présence de l'adhésif de l'étiquette.
Or, dans le cadre de l'invention, on s'intéresse plus spécialement à l'optimisation de ce paramètre d'adhérence ou d'accrochage du revêtement silicone sur le support, sans préjudice des autres spécifications.
Pour ce faire, il est prévu de mettre en oeuvre au moins un promoteur d'accrochage dans les compositions silicone susceptibles de réticuler/durcir par polyaddition, pour former un revêtement, hydrofuge et anti-adhérent sur tout support.
On connaît par la demande US-A-2004/0161618, des compositions silicone anti-adhérentes ayant une adhésion améliorée sur supports papier ou polymère et comprenant des POS linéaires alcénylés $M^{Vi}{}_{2-5}D_{50-1000}T_{a''' \geq 0}M_{0-0,5}$, des POS linéaires à motifs Si-H, un catalyseur au platine, un inhibiteur de réticulation, et, à titre d'additif promoteur d'accrochage, un POS de type MDM porteur de greffons fonctionnels de type époxy, oxirane ou carboxy. Plus précisément, cet additif peut être du type $MD^{AGE}D'M$ [AGE=allylglycidyléther] ou $MD^{alcoxysilyl}D^{carboxy}D'M$. Cet additif a l'inconvénient de comporter une teneur importante en motifs SiH, à savoir au moins un motif SiH par molécule ou au moins 0,24% en poids de motifs SiH. Avec cette teneur résiduelle, leur bifonctionnalité et leur réactivité, de tels additifs sont naturellement peu stables et leur conservation lors du stockage en est très limitée ; leur viscosité augmente rapidement jusqu'à la gélification qui peut intervenir, selon les cas, en quelques jours ou quelques mois; l'additif devient alors inutilisable.
Le document US 5166293A décrit une composition élastomère silicone comprenant un diorganopolysiloxane vinylé, un organohydrogénopolysiloxane, un catalyseur à base de platine, un alkoxyhydrogénosiloxane, et un polysiloxane ayant au moins un époxyde lié à un atome de silicium par un atome de carbone. Cette composition est présentée comme ayant une adhésion améliorée sur des supports métalliques, céramiques, et plastiques.
La demande de brevet européen EP0764702 décrit une composition silicone réticulable comprenant un diorganopolysiloxane alcénylé, une résine organopolysiloxane, des charges inorganiques, un organohydrogénopolysiloxane, un catalyseur à base de platine, un organosilicone époxydé et un composé à base de titane. Ces compositions peuvent être utilisées pour réaliser des revêtements fins pour air bags sans dilution dans un solvant.
La demande EP1108764 divulgue une composition élastomère silicone réticulable qui peut être utilisée pour enduire des air bags. Cette composition comprend un organopolysiloxane alcénylé, de la silice, un composant adhésif, une résine organopolysiloxane alcénylée, un organohydrogénopolysiloxane et un catalyseur à base de platine.
Le document US2004/161618 décrit des compositions silicones antiadhérentes comprenant un additif pour améliorer l'accrochage des revêtements anti-adhérents, un organopolysiloxane alcénylé, un organohydrogénopolysiloxane, un catalyseur d'hydrosilylation et un inhibiteur de réticulation.
Par ailleurs, la demande de brevet européen EP 0 556 023 décrit des compositions de polyorganosiloxane sans solvant, réticulables par chauffage, qui comprennent un siloxane alcénylé, un siloxane à hydrure de silicium, une silicone fonctionnalisée par époxy, un catalyseur métallique du groupe du platine, et un inhibiteur.
La demande de brevet européen EP0574264 décrit un procédé de synthèse d'une composition époxysilicone,

réticulable par réaction d'hydrosilylation, et qui comprend un époxyde à insaturation éthylénique, un organohydrogénosiloxane ou un organohydrogénosilane, et un catalyseur d'hydrosilylation.

La demande de brevet WO98/28376 décrit une composition anti adhérente comprenant un polyorganosiloxane ayant des fonctions époxy, une résine d'hydrure de silicium et un agent de réticulation.

Le document US4822687 décrit l'utilisation d'une composition réticulable comprenant un type particulier d'époxypolysiloxane, pour former un revêtement anti-adhérent.

Dans ce contexte, la présente invention a pour objectif essentiel de proposer de nouvelles compositions silicones liquides d'enduction, avantageusement sans solvant, réticulables en revêtement anti-adhérent et/ou hydrofuge pour support souple, de manière instantanée et conduisant à des revêtements silicones réticulés de très bonne qualité, en particulier en termes d'accrochage/adhérence sur le support ("rub-off élevé") et de profil d'anti-adhérence (force de décollement à haute vitesse suffisamment élevée), ces dernières propriétés résultant notamment d'un additif promoteur d'accrochage.

Un autre objectif essentiel de l'invention est de proposer de nouvelles compositions silicones liquides d'enduction, avantageusement sans solvant, réticulables rapidement en revêtement anti-adhérent et/ou hydrofuge pour supports souples, et comprenant un additif promoteur d'accrochage à la fois performant et sans effet néfaste sur la conservation desdites compositions.

Un autre objectif essentiel de l'invention est de proposer de nouvelles compositions silicones liquides d'enduction, additivées par un promoteur d'accrochage perfectionné, avantageusement sans solvant, réticulables rapidement en revêtement anti-adhérent et/ou hydrofuge pour supports souples, en particulier pour des films polymère, par exemple en polyester du type PET, le revêtement réticulé obtenu ayant:

- d'une part, une réticulation suffisante pour avoir des propriétés mécaniques et d'adhérence du coating convenables,
- et, d'autre part, un faible taux d'extractibles pour une bonne permanence des propriétés antiadhérentes favorable en particulier pour la préparation et l'utilisation des étiquettes adhésives issues de ces complexes.

Un autre objectif essentiel de l'invention est de proposer de nouvelles compositions silicones liquides d'enduction, additivées par un promoteur d'accrochage perfectionné, avantageusement sans solvant, réticulables en revêtement anti-adhérent et/ou hydrofuge pour supports souples, en particulier pour des films polymère, par exemple en polyester du type PET, ce revêtement résistant au contact prolongé avec des adhésifs sensibles à la pression, y compris les adhésifs acryliques.

Un autre objectif essentiel de l'invention est de proposer de nouvelles compositions silicones liquides d'enduction, additivées par un promoteur d'accrochage perfectionné, avantageusement sans solvant, réticulables en revêtement anti-adhérent et/ou hydrofuge pour supports souples, en particulier pour des films polymère, par exemple en polyester du type PET, cette réticulation s'effectuant rapidement à température modérée, ces compositions étant par ailleurs dotées de longues durées de vie en bain, à température ambiante.

Un autre objectif essentiel de l'invention est de proposer de nouvelles compositions silicones liquides d'enduction, additivées par un promoteur d'accrochage perfectionné, avantageusement sans solvant, réticulables en revêtement anti-adhérent et/ou hydrofuge pour supports souples, en particulier pour des films polymère, par exemple en polyester du type PET, ces compositions ayant des viscosités faibles idoines pour des procédés de réalisation de revêtements anti-adhérents à haute vitesse, y compris sur des équipements standards prévus pour des supports en papier, et ce sans générer de problèmes rédhibitoires de formation de brouillards ("misting").

Un autre objectif essentiel de l'invention est de proposer de nouvelles compositions silicone liquides d'enduction, additivées par un promoteur d'accrochage perfectionné, réticulables en revêtement anti-adhérent et/ou hydrofuge pour support souple, faciles à préparer et économiques.

Un autre objectif essentiel de l'invention est proposer un nouveau promoteur d'accrochage perfectionné, au moins aussi performant que les promoteurs connus et sans effet nuisible sur la conservation de la composition.

Un autre objectif essentiel de l'invention est de proposer un nouveau procédé de réalisation d'un revêtement, hydrofuge et anti-adhérent sur un support souple (e.g. papier ou polymère), de préférence un film polymère, plus préférentiellement un film polymère en polyester (par exemple en PET) ayant plus spécialement des propriétés améliorées d'accrochage ("rub-off') en particulier grâce à un additif promoteur d'accrochage, tout en satisfaisant par ailleurs aux exigences de contrôle du profil de la force de décollement, de faible taux d'extractibles et de coefficient de friction approprié, le tout avec une composition de départ avantageusement sans solvant, de viscosité compatible avec le revêtement à haute vitesse sans "misting".

Un autre objectif essentiel de l'invention est de proposer un nouveau procédé pour augmenter l'accrochage (i.e la résistance à l'abrasion) d'un revêtement silicone réticulé/durci, hydrofuge et anti-adhérent, appliqué sur tout support (e.g. papier ou polymère), de préférence un film polymère, plus préférentiellement un film polymère en polyester, et obtenu à partir d'une composition silicone susceptible de réticuler/durcir par polyaddition et comprenant un additif

promoteur d'adhérence perfectionné et performant. Un autre objectif essentiel de l'invention est de proposer un nouveau support souple (e.g. papier ou polymère), de préférence un film polymère, plus préférentiellement un film polymère en polyester (PET), présentant au moins un revêtement, hydrofuge, anti-adhérent, à base d'une composition silicone réticulée/durcie par polyaddition, et présentant d'excellentes propriétés d'accrochage ("rub-off"), de contrôle du profil de la force de décollement, de dureté (% extractibles) et de coefficient de friction approprié, le tout en partant d'une composition de départ avantageusement sans solvant, de viscosité compatible avec le revêtement à haute vitesse sans "misting".

Ces objectifs, parmi d'autres, sont atteints par la présente invention qui concerne en premier lieu une composition silicone réticulable/durcissable par polyaddition, pour former un revêtement, hydrofuge et anti-adhérent sur un support, selon la revendication 1.

Il est du mérite des inventeurs d'avoir mis au point un nouveau promoteur d'accrochage constitué par un silicone fonctionnalisé époxy particulièrement efficace et dont le taux en motifs SiH est nul ou quasi-nul, en tous les cas si faible que l'additif n'est pas sujet ou peu à des réactions de pontage impliquant des SiH. Il peut ainsi se conserver de manière prolongée, par exemple au moins un an, voire au moins deux ans, dans un état liquide, non gélifié, propre à être utilisé dans une composition à déposer sur un support pour former un revêtement anti-adhérent.

Il est à noter que les propriétés d'accrochage sur support sont d'autant plus positives, qu'elles perdurent, par exemple au moins deux semaines dans des conditions sévères d'humidité et/ou de température. Cette pérennité est d'autant plus remarquable qu'elle s'observe également lorsque le revêtement anti-adhérent est en contact avec l'adhésif, en particulier lorsque celui-ci est un acrylique.

Grâce à l'invention, les revêtements obtenus ont non seulement un excellent accrochage ("rub-off'), mais sont également dotés d'une force de décollement suffisamment élevée à grande vitesse et de bonnes propriétés mécaniques et physiques (aspect lisse, transparence et bon coefficient de friction).

Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.

Le revêtement obtenu est particulièrement adhérent sur le support, permet d'apporter la propriété d'anti-adhérence ("release") vis-à-vis des adhésifs types adhésifs sensibles à la pression, et présente une excellente résistance mécanique au contact prolongé avec ces adhésifs, y compris acryliques.

Ces caractéristiques avantageuses sont particulièrement exploitables pour réaliser l'anti-adhérence de supports souples par exemple papier ou polymère, notamment polymère en particulier polyester, par exemple PET, utiles comme "liners" d'étiquettes autocollantes (adhésif sensible à la pression), se présentant sous forme de rouleaux ou de bobines de films e.g. fabriqués à très grande vitesse.

Ceci est d'autant plus intéressant que ces résultats sont obtenus avec une composition silicone, dont le comportement rhéologique de la composition silicone n'est pas affecté (pas trop visqueuse), de sorte qu'elle est parfaitement apte à être enduite sur tout support et notamment sur tout support souple et qu'elle est peu ou pas sujette au "misting" dans des conditions industrielles d'enduction.

En outre, les compositions silicones d'enduction selon l'invention peuvent avantageusement être "sans solvant". Cela signifie qu'elles sont exemptes de solvant et, en particulier, sans solvant organique. On conçoit aisément les avantages que cela procure s'agissant de l'hygiène et de la sécurité.

Le compromis accrochage/conservation procuré par l'additif (D) selon l'invention repose au moins en partie sur l'absence ou la quasi-absence de motifs SiH dans cet additif. Une autre façon de définir l'invention à cet égard est d'indiquer que, de préférence, la composition selon l'invention est caractérisée en ce que la teneur en motifs Si-H de cet additif (D) est inférieure ou égale à 0,15, de préférence à 0,1, et plus préférentiellement encore à 0,05 % en poids par rapport à la masse du (ou des) POS constitutifs de (D).

De manière préférentielle la composition silicone contient majoritairement une huile vinylée au moins dans la chaîne, un réticulant à SiH dans la chaîne, et un fort ratio SiH/SiVi.

Ces compositions peuvent aussi être utilisées éventuellement pour le traitement de supports papier, pour apporter des propriétés d'anti-adhérence et avec une résistance améliorée du revêtement silicone vis-à-vis d'adhésifs agressifs (par exemple certains adhésifs sensibles à la pression "PSA: pressure sensitive adhesive" acryliques).

Sur le plan quantitatif, il est avantageux, selon l'invention, que la concentration en additif promoteur d'accrochage (D) [exprimée en % en poids par rapport à la masse totale de la composition] soit comprise entre 0,1 et 40, de préférence entre 0,5 et 20, et, plus préférentiellement encore entre 1 et 18.

Concernant l'impact négligeable de l'additif promoteur d'accrochage (D) sur la conservation de la partie de la composition silicone dans laquelle il est présenté, il est intéressant de noter que ladite composition a avantageusement une stabilité au stockage de au moins 6 mois (de préférence au moins un an) de stockage en atmosphère ambiante.

La stabilité au stockage peut être par exemple déterminée à l'aide d'un test objectif de stabilité, qui peut être défini comme la durée au bout de laquelle la viscosité de la composition testée a doublé.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi,

à un gradient de vitesse de cisaillement suffisamment faible pour que la viscosité mesurée soit indépendante du gradient de vitesse.

Conformément à l'invention, l'additif promoteur d'accrochage (D) est choisi dans le groupe de silicones comprenant:

1. les POS contenant :

- ► des motifs (I.2) avec c= 1 et c+d=2 : $D^{époxy}$
- ► éventuellement des motifs (I.2) avec c= 1 et c+d=3 : $M^{époxy}$
- ► éventuellement des motifs (I.3) avec e= 2 : D
- ► éventuellement des motifs (I.4) avec e= 1 et g+h=1 : $T^{alcoxy}$
- ► éventuellement des motifs (I.4) avec e= 1 et g+h=2 : $D^{alcoxy}$
- ► éventuellement des motifs (I.4) avec e= 1 et g+h=3 : $M^{alcoxy}$
- ► éventuellement des motifs (I.5) avec i= 1 et i+j=2 : D'
- ► éventuellement des motifs (I.5) avec i= 1 et i+j=3 : M'

de préférence de formule

$$M\,[D]_{d^{\circ}}\,[D^{alcoxy}]_{d^{a}}\,[D^{époxy}]_{d^{e}}\,[D']_{d'}\,[M^{époxy}]_{m^{e}}\,[M']_{m'}\,M$$

avec

$0 \leq d° < 500$, de préférence $0 \leq d° \leq 300$;
$0 \leq d^a \leq 50$ de préférence $0 \leq d^a \leq 40$,
$1 \leq d^e \leq 40$ de préférence $2 \leq d^e \leq 30$;
$0 \leq d' < 1$, de préférence $0 \leq d' \leq 0,5$;
$0 \leq m' < 1$, de préférence $0 \leq m' \leq 0,5$;
d'+m' étant inférieur à 1, de préférence inférieur ou égal à 0,5;
$0 \leq m^e \leq 2$;

2. les POS de formule moyenne $M[D]_{do}[D^{époxy}]_{d^e}[M^{époxy}]_{m^e}M$ avec $d^o$, $d^e$, $m^e$ tel que défini ci-dessus, et, plus préférentiellement encore, les POS de formule moyenne ci dessous :

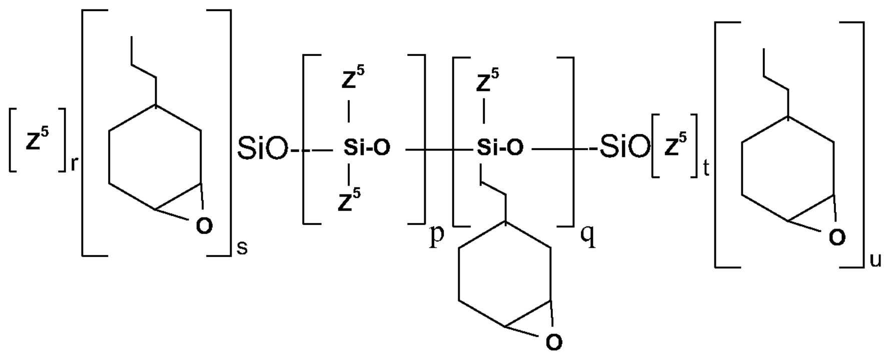

dans laquelle :

- ► les symboles $Z^5$ correspondent à des groupements identiques ou différents entre eux et répondent à la même définition que celle donnée ci-dessus pour les groupes Z dans la légende de la formule (I.1);
- ► $15 \leq p \leq 200$, de préférence $50 \leq p \leq 100$, et, plus préférentiellement encore $75 \leq p \leq 85$;
- ► $0 \leq q \leq 20$, de préférence $1 \leq q \leq 15$, et, plus préférentiellement encore $6 \leq q \leq 9$;
- ► $r + s = 3$;
- ► $0 \leq r \leq 3$;
- ► $0 \leq s \leq 3$;
- ► $t + u = 3$;
- ► $0 \leq t \leq 3$;

► $0 \leq u \leq 3$.

3. et leurs mélanges.

Il est entendu que les symboles $D^{époxy}$ $M^{époxy}$ $M^{alcoxy}$ $D^{alcoxy}$ $T^{alcoxy}$ sont des groupes siloxy fonctionnalisés par le groupement en exposant.

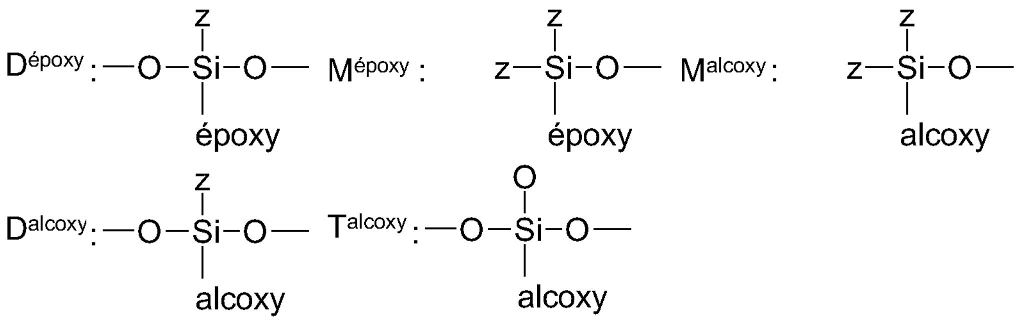
$D^{époxy}$ : $M^{époxy}$ : $M^{alcoxy}$ : $D^{alcoxy}$ : $T^{alcoxy}$ :

Dans tout le présent document, on se réfèrera à des éléments de nomenclature classique pour désigner les motifs siloxy M, D, T, Q des POS. A titre d'ouvrage de référence, on peut citer : NOLL " Chemistry and technology of silicones ", chapitre 1.1, page 1-9, Academic Press, 1968 - 2ème édition.

Pour améliorer encore les performances d'accrochage, notamment dans le cas où (D) comprend des POS (2) tels que définis ci-dessus, il est apparu opportun, suivant l'invention, que l'additif promoteur d'accrochage (D) comprenne au moins un photoamorceur (e.g. cationique), de préférence choisi parmi les borates d'onium, plus préférentiellement parmi les borates de iodonium et/ou les boranes.
A titre d'exemple de photoamorceur, on peut citer celui qui correspond à la formule :

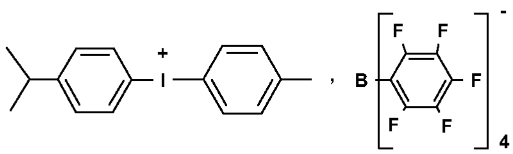

Pour plus de détails sur les borates d'onium appropriés, on se réfèrera, par exemple, aux demandes de brevet ou brevets suivants: US-B-6,864,311; US-B-6,291,540; US-B-5,468,902.
Le photoamorceur est avantageusement dilué dans un solvant protique, par exemple l'alcool isopropylique. Le taux de dilution est e.g. compris entre 10 et 30 %, en particulier égal à 20 % +/- 2.
Dans le cas où la composition comprend un photoamorceur, le revêtement peut être soumis à une exposition thermique et/ou actinique, par exemple UV, pour accélérer la réaction.

Pour plus de détails sur les boranes appropriés, on se réfèrera, par exemple, aux demandes de brevet ou brevets suivants : US-B-6,743,883; US-A-2004-0048975.

Il est apparu particulièrement judicieux conformément à l'invention, que la composition ait un ratio molaire Si-H / Si-alcényle, tel que :
$1{,}0 \leq$ Si-H/Si-alcényle $\leq 7$
de préférence $1{,}5 \leq$ Si-H/Si-alcényle $\leq 5$.

Suivant une possibilité parmi d'autres, la composition comprend une composante silicone alcénylée A contenant une fraction F1 et une fraction F2, différente l'une de l'autre,

- F2 ayant une activité de promotion de l'adhérence sur les supports (donc de la résistance à l'abrasion) des revêtements anti-adhérence obtenus par durcissement/réticulation de la composition,
- et F2 étant formée par au moins une huile silicone alcénylée choisie dans le groupe comprenant:

→ $(A_{2.1})$ les huiles silicone monoalcénylées comprenant chacune au moins un POS linéaire présentant, par molécule, une seule extrémité porteuse d'un seul groupe alcényle (de préférence en $C_2$-$C_6$) lié au silicium, et de formule linéaire moyenne $M^wD_mM$ dans laquelle M, $M^w$ et D sont des motifs siloxy de formule (I.1) avec pour M : a=0, b=3 ; $M^w$ : a=1, b=2 et pour D: a=0, b=2; et m est un entier naturel supérieur ou égal à 150;
→ $(A_{2.2})$ les huiles silicone longues comprenant chacune au moins un POS linéaire présentant, par molécule,

à chacune de ses extrémités un groupe alcényle (de préférence en $C_2$-$C_6$) lié au silicium et de formule linéaire moyenne $M^wD_nM^w$ dans laquelle $M^w$ et D sont des motif siloxy de formule (I.1) avec pour $M^w$ : a=1, b=2 et pour D: a=0, b=2; et n est un entier naturel supérieur ou égal à 250 ; la viscosité v2 desdites huiles $A_{2.2}$ étant comprise entre 3000 et 200000 mPa.s;

→ ($A_{2.3}$) les huiles silicone "faiblement" alcénylées comprenant chacune au moins un POS linéaire présentant, par molécule, au moins un groupe alcényle (de préférence en $C_2$-$C_6$) lié au silicium, de formule linéaire moyenne $(M^w)_x(M)_y(D)_p(D^w)_{p'}$ dans laquelle M, $M^w$ et D sont des motifs siloxy de formule (I.1) avec pour M,$M^w$ : a=1, b=2 et pour D: a=0, b=2, $D^w$: a=1, b=1; p, p' sont des entiers naturels; x,y=0,1 ou 2, x+y=2, le rapport massique $R^w$ (% en poids) des motifs alcényle sur la masse totale du POS $A_{2.3}$ est inférieur ou égal à 0,5, de préférence à 0,3 et mieux encore à 0,2;

→ et leurs mélanges;

Ce rapport massique $R^w$ (% en poids) des motifs Si-alcényle sur la masse totale de F2 à activité de promotion de l'accrochage, est par exemple défini comme suit:

→ pour $A_{2.1}$
$0,05 \leq R^w \leq 0,2$; de préférence $0,07 \leq R^w \leq 0,15$;
→ pour $A_{2.2}$
$0,05 \leq R^w \leq 0,25$; de préférence $0,1 \leq R^w \leq 0,2$.

Avantageusement:

- A2.1 est, par exemple, choisi dans le groupe comprenant les polydiméthylsiloxanes ayant à la fois des extrémités (diméthyl)(vinyl)silyle et des extrémités (triméthyl)(vinyl)silyle;
- A2.2 est, par exemple, choisi dans le groupe comprenant les polydiméthylsiloxanes ayant deux extrémités (diméthyl)(vinyl)silyle;
- A2.3 est, par exemple, choisi dans le groupe comprenant les poly(diméthylsiloxy)(methyl-vinylsiloxy)siloxanes à extrémités (diméthyl)-(vinyl)silyle.

Le polyorganosiloxane (I.1) de la composante silicone alcénylée A peut présenter une structure linéaire, ramifiée ou cyclique. Son degré de polymérisation est, par exemple, compris entre 2 et 5 000.
Dans un mode préféré de réalisation, A selon la revendication 7, comprend au moins une huile silicone alcénylée choisie dans le groupe comprenant au moins un POS linéaire présentant, par molécule, au moins deux groupes alcényle (de préférence en $C_2$-$C_6$) lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25°C) définie comme suit:
  $75 \leq v4 \leq 4.000$, de préférence $100 \leq v4 \leq 2.000$, et mieux encore $100 \leq v4 \leq 1.000$
- et de rapport massique $R^w$ (% en poids) des motifs Si-alcényle sur la masse totale du POS de A est défini comme suit:
  $0,1 \leq R^w \leq 3,5$, de préférence $0,2 \leq R^w \leq 3$, et mieux encore $0,5 \leq R^w \leq 3$.

Par exemple, la fraction F1 peut être une telle huile silicone alcénylée.
Des exemples de motifs siloxyle de formule (I.1) sont le motif vinyldiméthylsiloxane, le motif vinylphénylméthylsiloxane et le motif vinylsiloxane.
Des exemples de polyorganosiloxanes (I.1) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.
Les huiles vinylées sont des produits du commerce habituellement mises en oeuvre pour préparer des compositions durcissables antiadhérentes (e.g. brevet US-A-4,623,700). Les huiles à groupements alcényle plus lourds ou alcényloxyalkylène sont décrites notamment dans les brevets EP-B-0 219 720 et EP-A-0 454 130.
S'agissant de l'huile silicone réticulante B, elle peut par exemple comprendre au moins un polyorganosiloxane (II.2) comportant des motifs siloxyle de formule :

$$H_{d'}L_{e'}SiO_{\frac{4-(d'+e')}{2}} \qquad (II.2)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d' est 1 ou 2, e' est 0, 1 ou 2, d' + e' a une valeur comprise entre 1 et 3.

La viscosité dynamique $\eta_d$ (à 25° C) de ce polyorganosiloxane (I.2) $\geq$ à 5 de préférence à 10 et, plus préférentiellement encore, est comprise entre 20 et 1000 mPa.s.
Le polyorganosiloxane (I.2) peut présenter une structure linéaire, ramifiée ou cyclique. Le degré de polymérisation est supérieur ou égal à 2. Plus généralement, il est inférieur ou égal à 5.000.
Des exemples de motifs de formule (I.2) sont :
M' : $H(CH_3)_2SiO_{1/2}$, D' : $HCH_3SiO_{2/2}$, D' : $H(C_6H_5)SiO_{2/2}$.
Des exemples de polyorganosiloxane (I.2), c'est-à-dire d'huile réticulante (B) sont :

- M'DD' : les diméthylpolysiloxanes à extrémités hydrogénodiméthylsilyle, les poly(diméthylsiloxy)(méthylhydrogénosiloxy) $\alpha,\omega$-diméthylhydrogéno-siloxane,
- MDD' : les copolymères à motifs diméthyl-hydrogénométhylpolysiloxane à extrémités triméthylsilyle,
- M'DD' : les copolymères à motifs diméthyl-hydrogénométhylpolysiloxane à extrémités hydrogénodiméthylsilyle,
- MD' : les hydrogénométhylpolysiloxanes à extrémités triméthylsilyle,
- $D'_4$ : les hydrogénométhylpolysiloxanes cycliques.

Des exemples de ces huiles réticulantes (B) sont donnés dans le brevet US-A-4,623,700 et le brevet européen EP-B-0 219 720.
De préférence, l'huile silicone réticulante selon la revendication 8 comprend :

- au moins un POS (B1) de formule linéaire moyenne suivante:
  $M_\alpha M'_\beta D_\gamma D'_\delta$
  avec

  - $M = (R^1)_3SiO_{1/2}$
  - $M'= H_a(R^1)_bSiO_{1/2}$, a+b=3, a=1,2 ou 3, b=0 à 3
  - $D = (R^2)_2SiO_{2/2}$
  - $D'= HR^3SiO_{2/2}$
  - $R^1$, $R^2$, $R^3$ répondant indépendamment à la même définition que le groupe Z de la formule (I.1)
  - $\alpha$ = 0 à 2, $\beta$ = 2 à 0, $\delta + \gamma$ compris entre 10 et 200, de préférence entre 20 et 100, plus préférentiellement, entre 30 et 70, et mieux encore $\gamma = 0$;

    ► possédant une viscosité v5 (en mPa.s à 25°C) définie comme suit: $5 \leq v5 \leq 500$, de préférence $10 \leq v5 \leq 200$, et mieux encore $10 \leq v5 \leq 100$
    ► et présentant un titre en Si-H (% en poids par rapport à ce POS B1) défini comme suit: $5 \leq \text{Si-H} \leq 46$, de préférence $20 \leq \text{Si-H} \leq 46$, et mieux encore $30 \leq \text{Si-H} \leq 46$ ;

- et/ou au moins un POS (B2) ramifié de formule moyenne suivante:
  $M'_hQ_k$
  avec

  - $M' = H_a(R^1)_bSiO_{1/2}$, a+b=3, a=1,2 ou 3, b=0 à 3
  - $Q = SiO_{4/2}$
  - $4 \leq h \leq 20$ ; $1 \leq k \leq 4$ ou 5

    ► possédant une viscosité v5 (en mPa.s à 25°C) définie comme suit: $5 \leq v5' \leq 100$, de préférence $10 \leq v5' \leq 30$;
    ► et présentant un titre en Si-H (% en poids par rapport à ce POS B2) défini comme suit: $15 \leq \text{Si-H} \leq 40$, de préférence $25 \leq \text{Si-H} \leq 35$, et mieux encore $25 \leq \text{Si-H} \leq 30$.

Selon une première variante de la forme préférée (B1), $\alpha = 2$, $\beta = 0$, $\delta + \gamma$ compris entre 10 et 200, de préférence entre

20 et 100, plus préférentiellement, entre 30 et 70, et mieux encore $\gamma = 0$.

Selon une deuxième variante de la forme préférée de (B1):

$0 \leq \alpha \leq 2$
$0 \leq \beta \leq 2$
$0 \leq \gamma$
$0 < \delta$
$0 \leq \gamma/\delta$, de préférence $0 \leq \gamma/\delta \leq 2$; et plus préférentiellement encore $0 \leq \gamma/\delta \leq 1,5$;
$15 \leq (\beta/\delta) \times 1000 \leq 150$, de préférence $15 \leq (\beta/\delta) \times 1000 \leq 80$; et plus préférentiellement encore $15 \leq (\beta/\delta) \times 1000 \leq 60$

La formule linéaire moyenne du réticulant (B1) indiqué ci-dessus est une formule globale qui couvre :

♦ -a- les cas où le réticulant (B1) comprend les motifs M M'D D' sur une même molécule POS (de préférence linéaire), le réticulant pouvant comprendre une ou plusieurs molécules M M'D D' différentes,
♦ -b- les cas où le réticulant (B1) est formé par un mélange de molécules POS (de préférence linéaires) porteuses chacune d'une partie des motifs M M'D D',
♦ -c- les cas où le réticulant (B1) est formé par un mélange de réticulants (B1) (de préférence linéaires) de types -a- et -b-, tels que décrits ci-dessus.

A titre d'exemples de réticulant (B1) de type -b-, on peut citer les mélanges de (B1) comprenant des motifs M et D' et de POS comprenant des motifs M,D et D' ou des mélanges de (B1) comprenant des motifs M et D et de POS comprenant des motifs M',D et D', ou des mélanges de (B1) comprenant des motifs M et D' et de POS comprenant des motifs M et D, ou des mélanges de (B1) comprenant des motifs M' et D' et de POS comprenant des motifs M et D.

Les bases de compositions silicones polyaddition (A)(B) selon l'invention peuvent ne comporter que des polyorganosiloxanes (I.1) et (I.2) linéaires comme, par exemple, celles décrites dans les brevets : US-A-3 220 972, US-A-3 697 473 et US-A-4 340 709.

Les catalyseurs (C) sont également bien connus. On utilise, de préférence, les composés du platine et du rhodium. On peut, en particulier, utiliser les complexes du platine et d'un produit organique décrits dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (II), calculée en poids de platine-métal, est généralement comprise entre 2 et 500 ppm, de préférence entre 5 et 200 ppm basée sur le poids total de la composante silicone alcénylée (A) et de l'huile réticulant (B).

En complément de (D), la composition peut également inclure un autre additif promoteur d'accrochage (Dbis). Ce dernier est de préférence choisi parmi les silanes époxy-fonctionnels, de préférence dans le groupe comprenant :

◦ le (3,4-époxycyclohexyl)éthyltriéthoxy-silane [Coatosil® 1770],
◦ le Tris(3-(triméthoxysilyl)propyl)isocyanurate [A-Link 597],
◦ le (gammaglycidoxypropyle)triméthoxysilane [Dynasilan® GLYMO],
◦ le (gamma méthacryloxypropyle)triméthoxysilane [Dynasilan® MEMO],
◦ des composés silicones comportant à la fois des groupements SiVi et des groupements époxy fonctionnels,
◦ et leurs mélanges.

Les concentrations adaptées en additif (Dbis) sont, par exemple, comprises entre 0,5 et 5%, de préférence entre 1 et 3%.

Selon une disposition préférée de l'invention, la composition comprend au moins un inhibiteur de réticulation (E) choisi parmi les composés suivants :

- les polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les dialkyldicarboxylates (brevets US-A-4,256,870 ; 4,476,166),
- les dialkylacétylènedicarboxylates (brevet US-A-4,347,346)
- les maléates alkylés,
- les diallylmaléates,
- les alcools acétyléniques (brevets US-A-3,989,866; 4,336,364; 3,445,420),

- et leurs mélanges.

Ces alcools acétyléniques, (cf. FR-B-1 528 464 et FR-A-2 372 874), qui font partie des bloqueurs thermiques de réaction d'hydrosilylation préférés, ont pour formule :

$$R^4\text{-}(R^5)C(OH)\text{-}C\equiv CH$$

formule dans laquelle,

- $R^4$ est un radical alkyle linéaire ou ramifié, ou un radical phényle ;
- $R^5$ est H ou un radical alkyle linéaire ou ramifié, ou un radical phényle ;

les radicaux $R^4$, $R^5$ et l'atome de carbone situé en a de la triple liaison pouvant éventuellement former un cycle ; le nombre total d'atomes de carbone contenu dans $R^4$ et $R^5$ étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.
Un tel ralentisseur est présent en quantité telle qu'il inhibe l'action du catalyseur à température ambiante, cette action inhibitrice cessant lors du traitement de réticulation à température élevée; cette quantité est généralement de l'ordre de 3000 ppm au maximum, de préférence à raison de 100 à 2500 ppm par rapport au poids total de la composante silicone alcénylée (A) et de l'huile silicone (B), en particulier, dans le cas où l'agent inhibiteur d'hydrosilylation est l'éthynylcyclohexanol.

Selon une variante, la composition silicone réticulable anti-adhérente renferme au moins un système modulateur d'adhérence (F).
Ce système modulateur d'adhérence (F) est sélectionné parmi les systèmes connus. Il peut s'agir de ceux décrits dans le brevet français FR-B-2 450 642, le brevet US -B- 3 772 247 ou la demande de brevet européen EP-A-0 601 938. A titre d'exemples, on peut citer les modulateurs à base :

- ◦ de 96 à 85 parties en poids d'au moins une résine polyorganosiloxane (A) réactive de type : $MD^{Vi}Q$, $MM^{Vi}Q$, $MD^{Vi}T$, $MM^{Héxényle}Q$, ou $MM^{Allyloxypropyle}Q$,
- ◦ de 4 à 15 parties en poids d'au moins une résine (B) non réactive de type: MD'Q, MDD'Q, MDT', MQ, ou MDQ.

Suivant une caractéristique préférée de l'invention, la concentration en [(F)], en % en poids sur sec par rapport à la masse totale de la composition , est définie comme suit:

- ❖ $[(F)] \leq 20$
- ❖ de préférence $[(F)] \leq 15$
- ❖ et plus préférentiellement encore $[(F)] \leq 10$.

Il a pu en effet être observé, dans le cadre de l'invention, que l'on optimise les performances du système modulateur, pour autant que l'on prenne soin de l'introduire dans la composition silicone anti-adhérente, en quantité telle que F ne représente pas plus de 20 % en poids sur sec, par rapport à la masse totale de la composition.

Le diluant (G) éventuellement présent dans la composition est avantageusement choisi parmi les alpha oléfines notamment celles comportant de 4 à 15 atomes de carbone par molécule.
D'autres additifs fonctionnels (H) peuvent être incorporés dans la composition. Ces additifs peuvent être choisis parmi les charges telles que par exemple des microbilles de verre, des agents anti-"misting"...

Avantageusement, les compositions selon la revendication 10 durcissables complètes ABC(D)(E)(G)(H) - les composants (-) étant facultatifs - sont fluides à température normale; leur viscosité peut être, par exemple, une viscosité v (en mPa.s à 25°C) définie comme suit:
$100 \leq v \leq 3.000$, de préférence $200 \leq v \leq 2.000$, et mieux encore $500 \leq v \leq 1.000$

La préparation de la composition silicone selon l'invention, utilisable notamment comme base d'enduction pour la réalisation de revêtements anti-adhérents et hydrofuges, cette composition étant du type de celle définie ci-dessus, consiste simplement à mélanger les constituants ABC(D)(E)(F)(G)(H) à l'aide de moyens et de méthodologies de mélange connus de l'homme de l'art.

L'invention vise également l'utilisation d'une huile silicone époxydée comprenant au moins un PolyOrganoSiloxane (POS) comprenant:

◦ des motifs (I.2) de formule :

$$Y_c Z^1_d SiO_{\frac{4-(c+d)}{2}} \qquad (I.2)$$

◦ éventuellement des motifs (I.3) de formule

$$Z^2_e SiO_{\frac{4-e}{2}} \qquad (I.3)$$

◦ éventuellement des motifs (I.4) de formule

$$Y'_g Z^3_h SiO_{\frac{4-(g+h)}{2}} \qquad (I.4)$$

◦ éventuellement des motifs (I.5) de formule

$$H_i Z^4_j SiO_{\frac{4-(i+j)}{2}} \qquad (I.5)$$

formules dans lesquelles :

- Y représente indépendamment un groupe hydrocarboné époxyfonctionnel linéaire, ramifié ou cyclique,
- Y' représente indépendamment un groupe alcoxyfonctionnel;
- $Z^1$, $Z^2$, $Z^3$, $Z^4$ sont des groupes qui répondent à la même définition que celle donnée ci-dessus pour les groupes Z dans la légende de la formule (I.1),
- c est 1 ou 2, d est 0, 1 ou 2 et c + d est compris entre 1 et 3;
- e est compris entre 0 et 3;
- g est 1 ou 2, h est 0, 1 ou 2 et g + h est compris entre 1 et 3;
- i est 1 ou 2, j est 0, 1 ou 2 et i + j est compris entre 1 et 3;

cette huile comprenant, par molécule, moins d'un motif Si-H,;
cette huile étant telle que l'additif promoteur d'accrochage (D) défini ci-dessus, comme additif promoteur d'accrochage pour une composition silicone réticulable/durcissable par polyaddition, pour former un revêtement, hydrofuge et anti-adhérent sur un support.

Les compositions selon l'invention peuvent être déposées sur des supports souples (papier ou polymère) de préférence formés par des films de matière plastique polymère sélectionnés parmi les polyoléfines (e.g. polyéthylène, polypropylène...) et/ou parmi les polyesters (e.g. PET ...) ces derniers étant plus particulièrement visés. Cela n'exclut pas pour autant d'autres supports souples tels que des papiers de types divers (supercalendré, couché...), des cartons, des feuilles de cellulose, des feuilles en métal...
Les supports souples en polyester par exemple du genre PET revêtus d'une couche anti-adhérente en silicone, sont utilisés comme "liners" pour des étiquettes adhésives.
Selon un autre de ses aspects, l'invention concerne un procédé de réalisation d'un revêtement, hydrofuge et anti-adhérent sur un support, de préférence un film polymère, plus préférentiellement un film polymère en polyester, caractérisé en ce qu'il consiste à appliquer sur ce support au moins une couche d'une composition silicone telle que définie ci-dessus, et à faire en sorte que cette couche réticule, de préférence en l'activant par chauffage.
Ces compositions peuvent être appliquées à l'aide de dispositifs utilisés sur les machines industrielles d'enduction du

papier tels qu'une tête d'enduction par exemple à cinq rouleaux, des systèmes à lames d'air ou à barre égalisatrice, sur des supports ou matériaux souples, puis durcies par circulation dans des fours-tunnels chauffés à 70-200°C; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180°C.
Les quantités de compositions déposées sont par exemple de l'ordre de 0,5 à 2 g par $m^2$ de surface à traiter, ce qui correspond au dépôt de couches de l'ordre de 0,5 à 2 $\mu$m.
Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon l'invention, pour la réticulation du revêtement, le support enduit avec la composition silicone polyaddition est placé à une température de préférence inférieure ou égale à 180°C pendant moins de 10 secondes.

Selon un autre de ses objets, l'invention vise également un procédé pour augmenter l'accrochage (i.e résistance à l'abrasion) d'un revêtement silicone réticulé/durci, hydrofuge et anti-adhérent, appliqué sur un support, de préférence un film polymère, plus préférentiellement un film polymère en polyester, et obtenu à partir d'une composition silicone susceptible de réticuler/durcir par polyaddition et telle que définie ci-avant.

Enfin, l'invention concerne un support souple (e.g. papier ou polymère), de préférence un film polymère, plus préférentiellement un film polymère en polyester caractérisé en ce qu'il comporte au moins un revêtement, hydrofuge et anti-adhérent à base d'une composition silicone réticulé/durci par polyaddition et telle que décrite ci-dessus.

Les revêtements silicone anti-adhérents selon l'invention sont bien et durablement accrochés sur les supports souples notamment en PET, même dans des conditions drastiques d'humidité et de température, et au contact prolongé avec un adhésif acrylique. Ils sont réticulés/durcis (peu d'extractibles). Ils ont un profil de force de décollement tel que la force de pelage reste élevée même à grande vitesse (bonne anti-adhérence). Ils sont lisses et transparents, ce qui finit de faire d'eux des supports d'étiquettes performants.

Les exemples suivants sont donnés à titre indicatif et ne peuvent être considérés comme une limite du domaine et de l'esprit de l'invention.

**EXEMPLES :**

**Description des constituants de la composition** :

- Polymère vinylé A :
  poly(diméthyl)(méthyl-vinyl)siloxane à terminaisons triméthylsiloxy de viscosité 450 mPa.s et comportant 2,5% en poids de groupements Vi.
- Réticulant SiH B :
  polyméthylhydrogénosiloxane à terminaisons triméthylsiloxy titrant 46% en poids de groupements SiH.
- Catalyseur C: complexe de Karstedt titrant 0,2% en poids de platine métal.

**Description des Structures époxy mises en œuvre** :

- Additif D1 = Huile silicone époxy obtenue par greffage d'allylglycidyléther (AGE) sur une huile silicone à fonctions SiH du type $MD_9D'_4M$, et de structure moyenne : $MD_9D^{AGE}{}_4M$ (les groupements $D^{AGE}$ sont répartis sur la chaîne polymère de façon statistique);
- Additif D2 = Huile silicone époxy éthoxylée, obtenue en faisant réagir l'éthanol puis l'AGE sur une huile silicone à fonctions SiH du type $MD'_{55}M$ , et de structure moyenne : $MD^{OEt}{}_{33}D^{AGE}{}_{22}M$ ;
- Additif D3 = Huile silicone époxy obtenue par greffage de groupements époxycyclohexyle
  - de formule moyenne ci dessous où p = 80 et q =7 :

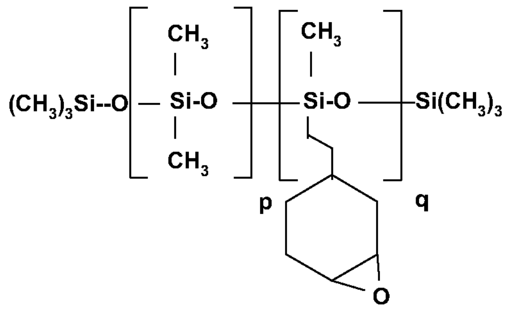

- et contenant un photoamorceur cationique en solution dans l'alcool isopropylique; Le photoamorceur utilisé est en solution à 18% dans l'isopropanol et correspond à la formule :

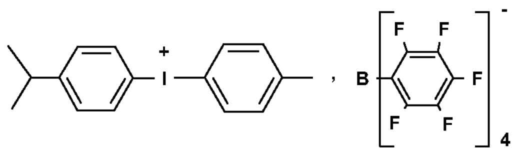

Nota : M représente un motif $Me_3SiO_{1/2}$
D' représente un motif $MeHSiO_{2/2}$
D représente un motif $Me_2SiO_{2/2}$
T représente un motif $MeSiO_{3/2}$

Par RMN, et par réaction de potasse alcoolique, on confirme l'absence de SiH résiduels dans les huiles époxy D1 et D2. (limite de sensibilité: 0,1 %)

**Conditions d'enduction et réticulation - nature & référence du film PET utilisé**

Toutes les enductions ont été réalisées sur une machine d'enduction ROTOMEC à 5 cylindres, avec réticulation du silicone déposé sur le film polyester dans les conditions générales suivantes :

- Type de support enduit : film polyester Lumirror 60,01 de 30 µm d'épaisseur (Fournisseur: Toray plastics)
- Vitesse machine déroulement support : 100 m / min
- Température des fours : 180 °C
- Température support à la sortie du four : 139 °C

**Exemple 1 : formulation témoin sans additif époxydé**

On mélange dans un poudrier de 250 ml le polymère silicone vinylé A (150g) et le réticulant B (10,4g). On mélange soigneusement la formulation avant d'ajouter le catalyseur C (7,5g). On agite de nouveau la préparation avant de la déverser dans l'entrefer pour enduction sur le film.

**Exemple 2 : essai avec 2% additif époxydé D1**

On mélange dans un poudrier de 250 ml le polymère vinylé A (150g) avec l'additif D1 (3,4g) et le réticulant B (10,4g).On mélange soigneusement la formulation avant d'ajouter le catalyseur C (7,5g). On agite de nouveau la préparation avant de la déverser dans l'entrefer pour enduction sur le film.

**Exemple 3 : essai avec 2% additif époxydé D2**

On mélange dans un poudrier de 250 ml le polymère vinylé A (150g) avec l'additif D2 (3,4g) et le réticulant B (10,4g). On mélange soigneusement la formulation avant d'ajouter le catalyseur C (7,5g). On agite de nouveau la préparation avant de la déverser dans l'entrefer pour enduction sur le film.

**Exemple 4 : essai avec additif époxydé D3 et traitement UV**

L'exemple 1 est répété, mais en ajoutant à la formulation 15 % d'additif D3.
Pour cet exemple, avant passage dans le four le film siliconé est exposé à des radiations UV, par passage sous une lampe fusion à une puissance de 120 W/cm.

**Tests :**

Une fois sorti de la machine d'enduction le film est soumis à un test de vieillissement qui consiste à appliquer au contact du PET siliconé un adhésif acrylique (RP 40) commercialisé par la société UPM-RAFLATAC.
Le complexe est ensuite placé dans une étuve climatique réglée à 50°C / 70% d'humidité.
La mesure de Rub-Off pour vérifier la stabilité de la couche silicone consiste, après avoir décollé l'adhésif, à frotter l'index sur le support siliconé pour imposer à la couche des contraintes mécaniques. On note le nombre d'allers-retours avec le doigt avant apparition du phénomène de rub-off (ou gommage), correspondant à une déchirure en lambeaux du revêtement silicone. La note de 10 confirme l'excellente stabilité de la couche silicone. Une note de 1 correspond au contraire à l'apparition de pelures de silicone dès le premier aller-retour du doigt.

**Résultats/propriétés :**

Le tableau ci-dessous résume pour les différents essais réalisés :

- le dépôt de silicone, c'est-à-dire la quantité de silicone déposée par surface de polyester
- la fraction de silicone extractible à la Méthyl-IsoButylcétone (MIBK), c'est-à-dire le taux de silicone non réticulé
- la résistance au rub-off du film siliconé, après une durée de contact croissante avec l'adhésif acrylique en étuve humide.

On constate l'amélioration de la tenue du film siliconé, suite à l'incorporation des huiles additifs époxydés, et ce même après contact prolongé avec l'adhésif.

| | Pol. vinylé | Réticulant | Dépôt | extractibles | Rub-off après contact avec l'adhésif | | | | | |
|---|---|---|---|---|---|---|---|---|---|---|
| Exemples / Additif | | | $g/m^2$ | % | 7 jours | 14 jours | 21 jours | 35 jours | 42 jours | 49 jours |
| 1 / témoin sans additif | A | B | 0,9 | 7,4 | 10 | 5 | 1 | 1 | 1 | 1 |
| 2 / D1 | A | B | 0,83 | 5,5 | 10 | 10 | 10 | 10 | 10 | 10 |
| 3 / D2 | A | B | 0,98 | 5,4 | 10 | 10 | 10 | 10 | 10 | 10 |
| 4 / D3+UV | A | B | 0,86 | - | 10 | 10 | 10 | 10 | 10 | 10 |

## Revendications

1. Composition silicone réticulable/durcissable par polyaddition, pour former un revêtement, hydrofuge et anti-adhérent sur un support, comprenant :

   ✶ (A) une composante silicone alcénylée contenant au moins une huile silicone fonctionnelle comprenant au moins un PolyOrganoSiloxane (POS) comprenant des motifs (I.1) de formule

$$W_aZ_bSiO_{\frac{4-(a+b)}{2}} \qquad (I.1)$$

   dans laquelle :

- W représente indépendamment un groupe fonctionnel alcényle,
- Z représente indépendamment un groupe hydrocarboné monovalent, exempt d'action défavorable sur l'activité du catalyseur, choisi parmi les groupes alkyles ayant de 1 à 8 atomes de carbone inclus,
- a est 1 ou 2, b est 0, 1 ou 2 et a + b est compris entre 1 et 3;

✶ (B) au moins une huile silicone réticulante comprenant au moins un POS hydrogéné présentant, par molécule, au moins trois atomes d'hydrogène liés au silicium;
✶ (C) au moins un catalyseur composé d'au moins un métal appartenant au groupe du platine;
✶ (D) au moins un additif promoteur d'accrochage
cet additif promoteur d'accrochage (D) comprenant, par molécule, moins d'un motif Si-H;
✶ (E) éventuellement au moins un inhibiteur de réticulation;
✶ (F) éventuellement, un système modulateur d'adhérence;
✶ (G) éventuellement, au moins un diluant;
✶ (H) éventuellement, au moins un autre additif fonctionnel,

**caractérisée en ce que** l'additif promoteur d'accrochage (D) est choisi dans le groupe de silicones comprenant:

1. les POS contenant :

► des motifs (I.2) de formule

$$Y_c Z^1_d SiO_{\frac{4-(c+d)}{2}} \qquad (I.2)$$

avec c= 1 et c+d=2 : $D^{époxy}$
► éventuellement des motifs (I.2) avec c= 1 et c+d=3 : $M^{époxy}$
► éventuellement des motifs (I.3) de formule

$$Z^2_e SiO_{\frac{4-e}{2}} \qquad (I.3)$$

avec e= 2 : D
► éventuellement des motifs (I.4) de formule

$$Y'_g Z^3_h SiO_{\frac{4-(g+h)}{2}} \qquad (I.4)$$

avec e= 1 et g+h=2 : $D^{alcoxy}$
► éventuellement des motifs (I.5) de formule

$$H_i Z^4_j SiO_{\frac{4-(i+j)}{2}} \qquad (I.5)$$

avec i= 1 et i+j=2 : D'
► éventuellement des motifs (I.5) avec i= 1 et i+j=3 : M'
formules dans lesquelles :

- Y représente indépendamment un groupe hydrocarboné époxyfonctionnel linéaire, ramifié ou cyclique
- Y' représente indépendamment un groupe alcoxyfonctionnel;
- $Z^1$, $Z^2$, $Z^3$, $Z^4$ sont des groupes qui répondent à la même définition que celle donnée ci-dessus pour les groupes Z dans la légende de la formule (I.1),
- c est 1 ou 2, d est 0, 1 ou 2 et c + d est compris entre 1 et 3;
- e est compris entre 0 et 3;

- g est 1 ou 2, h est 0, 1 ou 2 et g + h est compris entre 1 et 3;
- i est 1 ou 2, j est 0, 1 ou 2 et i + j est compris entre 1 et 3;

2. les POS de formule moyenne:

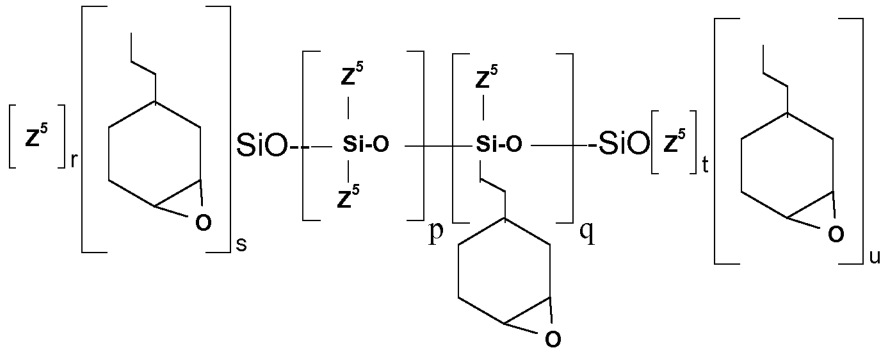

dans laquelle :

► les symboles $Z^5$ correspondent à des groupements identiques ou différents entre eux et répondent à la même définition que celle donnée ci-dessus pour les groupes Z dans la légende de la formule (I.1);
► $15 \leq p \leq 200$;
► $0 \leq q \leq 20$;
► $r + s = 3$;
► $0 \leq r \leq 3$;
► $0 \leq s \leq 3$;
► $t + u = 3$;
► $0 \leq t \leq 3$;
► $0 \leq u \leq 3$;

3. et leurs mélanges.

**2.** Composition selon la revendication 1, **caractérisée en ce que** la teneur en motifs Si-H de cet additif (D) est inférieure ou égale à 0,15 en poids par rapport à la masse du (ou des) POS constitutifs de (D).

**3.** Composition selon la revendication 1, **caractérisée en ce que** la concentration en additif promoteur d'accrochage (D) [exprimée en % en poids par rapport à la masse totale de la composition] est comprise entre 0,1 et 40.

**4.** Composition selon la revendication 1, **caractérisée par** une stabilité au stockage d'au moins 6 mois de stockage en atmosphère ambiante, la stabilité au stockage étant définie comme la durée au bout de laquelle la viscosité de la composition testée a doublé.

**5.** Composition selon la revendication 1, **caractérisée en ce que** l'additif promoteur d'accrochage (D) comprend au moins un photoamorceur.

**6.** Composition selon la revendication 1, **caractérisée par** un ratio molaire Si-H / Si-alcényle, tel que :
$1,0 \leq$ Si-H/Si-alcényle $\leq 7$.

**7.** Composition selon la revendication 1, **caractérisée en ce que** A comprend au moins une huile silicone alcénylée choisie dans le groupe comprenant au moins un POS linéaire présentant, par molécule, au moins deux groupes alcényle lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25°C) définie comme suit:
$75 \leq v4 \leq 4.000$,

- et de rapport massique $R^w$ (% en poids) des motifs Si-alcényle sur la masse totale du POS de A est défini comme suit:
$0,1 \leq R^w \leq 3,5$,
la viscosité v4 étant une viscosité dynamique à 25°C qui est mesurée à un gradient de vitesse de cisaillement suffisamment faible pour que la viscosité mesurée soit indépendante du gradient de vitesse.

**8.** Composition selon la revendication 1, **caractérisée en ce que** l'huile silicone réticulante B comprend :

- au moins un POS (B1) de formule linéaire moyenne suivante:
$M_\alpha M'_\beta D_\gamma D'_\delta$
avec

• $M = (R^1)_3SiO_{1/2}$
• $M' = H_a(R^1)_bSiO_{1/2}$, a+b=3, a=1,2 ou 3, b=0 à 3
• $D = (R^2)_2SiO_{2/2}$
• $D' = HR^3SiO_{2/2}$
• $R^1$, $R^2$, $R^3$ répondant indépendamment à la même définition que le groupe Z de la formule (I.1)
• $\alpha$ = 0 à 2, $\beta$ = 2 à 0,$\delta + \gamma$ compris entre 10 et 200,

► possédant une viscosité v5 (en mPa.s à 25°C) définie comme suit:
$5 \leq v5 \leq 500$,
► et présentant un titre en Si-H (% en poids par rapport à ce POS B1) défini comme suit:
$5 \leq$ Si-H $\leq 46$,

- et/ou au moins un POS (B2) ramifié de formule moyenne suivante:
$M'_hQ_k$
avec

• $M' = H_a(R^1)_bSiO_{1/2}$, a+b=3, a=1,2 ou 3, b=0 à 3
• $Q = SiO_{4/2}$
• $4 \leq h \leq 20$ $1 \leq k \leq 4$ ou 5

► possédant une viscosité v5 (en mPa.s à 25°C) définie comme suit:
$5 \leq v5' \leq 100$;
► et présentant un titre en Si-H (% en poids par rapport à ce POS B2) défini comme suit:
$15 \leq$ Si-H $\leq 40$,

la viscosité v5 étant une viscosité dynamique à 25°C qui est mesurée à un gradient de vitesse de cisaillement suffisamment faible pour que la viscosité mesurée soit indépendante du gradient de vitesse.

**9.** Composition selon l'une quelconque des revendications précédentes, **caractérisée en ce qu'**elle comprend au moins un co-additif promoteur d'accrochage ($D_{bis}$) choisi parmi les silanes époxy fonctionnels.

**10.** Composition selon l'une quelconque des revendications précédentes, **caractérisée par** une viscosité v (en mPa.s à 25°C) définie comme suit:
$100 \leq v \leq 3.000$,
la viscosité v étant une viscosité dynamique à 25°C qui est mesurée à un gradient de vitesse de cisaillement suffisamment faible pour que la viscosité mesurée soit indépendante du gradient de vitesse.

**11.** Utilisation d'une huile silicone époxydée comprenant au moins un PolyOrganoSiloxane (POS) comprenant:

◦ des motifs (I.2) de formule :

$$Y_c Z^1_d SiO_{\frac{4-(c+d)}{2}} \qquad (I.2)$$

◦ éventuellement des motifs (I.3) de formule

$$Z^2_eSiO_{\frac{4-e}{2}} \quad (I.3)$$

◦ éventuellement des motifs (I.4) de formule

$$Y'_g Z^3_hSiO_{\frac{4-(g+h)}{2}} \quad (I.4)$$

◦ éventuellement des motifs (I.5) de formule

$$H_iZ^4_jSiO_{\frac{4-(i+j)}{2}} \quad (I.5)$$

formules dans lesquelles :

- Y représente indépendamment un groupe hydrocarboné époxyfonctionnel linéaire, ramifié ou cyclique,
- Y' représente indépendamment un groupe alcoxyfonctionnel;
- $Z^1$, $Z^2$, $Z^3$, $Z^4$ sont des groupes qui répondent à la même définition que celle donnée ci-dessus pour les groupes Z dans la légende de la formule (I.1),
- c est 1 ou 2, d est 0, 1 ou 2 et c + d est compris entre 1 et 3;
- e est compris entre 0 et 3;
- g est 1 ou 2, h est 0, 1 ou 2 et g + h est compris entre 1 et 3;
- i est 1 ou 2, j est 0, 1 ou 2 et i + j est compris entre 1 et 3;

cette huile comprenant, par molécule, moins d'un motif Si-H,;
cette huile étant telle que l'additif promoteur d'accrochage (D) défini dans au moins l'une des revendications 1 à 5, comme additif promoteur d'accrochage pour une composition silicone réticulable/durcissable par polyaddition, pour former un revêtement, hydrofuge et anti-adhérent sur un support.

**12.** Procédé de réalisation d'un revêtement, hydrofuge et anti-adhérent sur un support, **caractérisée en ce qu'**il consiste à appliquer sur ce support au moins une couche d'une composition silicone selon l'une quelconque des revendications 1 à 10, et à faire en sorte que cette couche réticule.

**13.** Procédé pour augmenter l'accrochage (résistance à l'abrasion) d'un revêtement silicone réticulé/durci, hydrofuge et anti-adhérent, appliqué sur un support, **caractérisé en ce qu'**il consiste à obtenir ledit revêtement à partir d'une composition silicone selon l'une quelconque des revendications 1 à 10.

**14.** Support souple **caractérisé en ce qu'**il comporte au moins un revêtement, hydrofuge et anti-adhérent à base d'une composition silicone selon l'une quelconque des revendications 1 à 10.

## Patentansprüche

**1.** Polyadditionshärtbare/härtbare Silikonzusammensetzung zum Bilden einer wasserabweisenden und antihaftbeschichteten Beschichtung auf einem Substrat, umfassend:

✶ (A) eine alkenylierte Silikonkomponente, die mindestens ein funktionelles Silikonöl enthält, das mindestens ein PolyOrganosiloxan (POS) umfasst, das Einheiten (I.1) der Formel

$$W_aZ_bSiO_{\frac{4-(a+b)}{2}} \quad (I.1)$$

in der:

- W unabhängig voneinander eine alkenylfunktionelle Gruppe darstellt,
- Z stellt unabhängig voneinander eine monovalente Kohlenwasserstoffgruppe ausgewählt aus Alkylgruppen mit 1 bis 8 Kohlenstoffatomen, jeweils einschließlich, dar - ausgenommen solcher, die die Aktivität des Katalysators nachteilig beeinflussen,
- a ist 1 oder 2, b ist 0, 1 oder 2 und a + b 1 zwischen 1 und 3;

✶ (B) mindestens ein vernetzendes Silikonöl, umfassend mindestens ein hydriertes POS mit mindestens drei siliziumgebundenen Wasserstoffatomen pro Molekül;
✶ (C) mindestens einen Katalysator, der aus mindestens einem Metall besteht, das zur Platingruppe gehört;
✶ (D) mindestens ein Haftvermittleradditiv;
wobei dieser Haftvermittleradditiv (D) pro Molekül weniger als eine Si-H-Einheit pro Molekül umfasst;
✶ (E) gegebenenfalls mindestens einen Vernetzungsinhibitor;
✶ (F) gegebenenfalls ein Haftungsmodulatorsystem;
✶ (G) gegebenenfalls mindestens ein Verdünnungsmittel;
✶ (H) gegebenenfalls mindestens ein weiteres funktionelles Additiv,

**dadurch gekennzeichnet, dass** das Haftvermittleradditiv (D) ausgewählt ist aus der Gruppe der Silicone, umfassend:

1. POS mit:

► Einheiten (I.2) der Formel

$$Y_c Z^1_d SiO_{\frac{4-(c+d)}{2}} \qquad (I.2)$$

mit c= 1 und c+d=2 : $^{Epoxy}$
► optional Einheiten (I.2) mit c= 1 und c+d=3 : $M^{Epoxy}$
► gegebenenfalls Einheiten (I.3) der Formel

$$Z^2_e SiO_{\frac{4-e}{2}} \qquad (I.3)$$

mit e= 2 : D
► gegebenenfalls Einheiten (I.4) der Formel

$$Y'_g Z^3_h SiO_{\frac{4-(g+h)}{2}} \qquad (I.4)$$

mit e= 1 und g+h=2 : $D^{Alkoxy}$
► gegebenenfalls Einheiten (I.5) der Formel

$$H_i Z^4_j SiO_{\frac{4-(i+j)}{2}} \qquad (I.5)$$

mit i= 1 und i+j=2 : D'
► mögliche Einheiten (I.5) bei i= 1 und i+j=3 : M' Formeln, wobei:

- Y unabhängig voneinander eine lineare, verzweigte oder cyclische epoxyfunktionelle Kohlenwasserstoffgruppe darstellt.
- Y' unabhängig voneinander eine alkoxyfunktionelle Gruppe darstellt;

- $Z^1$, $Z^2$, $Z^3$, $Z^4$ sind Gruppen, die die gleiche Definition wie vorstehend für die Z-Gruppen in der Legende der Formel (I.1) erfüllen,
- c ist 1 oder 2, d ist 0, 1 oder 2 und c + d ist zwischen 1 und 3;
- e liegt zwischen 0 und 3;
- g ist 1 oder 2, h ist 0, 1 oder 2 und g + h ist zwischen 1 und 3;
- i ist 1 oder 2, j ist 0, 1 oder 2 und i + j ist zwischen 1 und 3;

2. POSs der Durchschnittsformel:

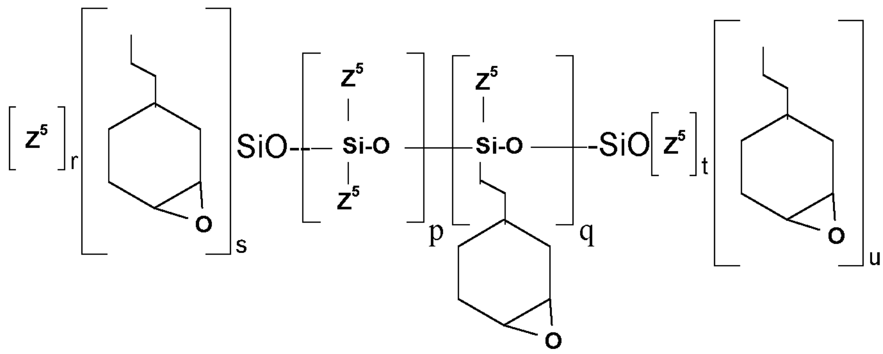

wobei:

- ► die Symbole $Z^5$ gleichen oder verschiedenen Gruppen entsprechen und die gleiche Definition wie vorstehend für die Z-Gruppen in der Legende der Formel (I.1) haben;
- ► $15 \leq p \leq 200$;
- ► $0 \leq q \leq 20$;
- ► $r+s = 3$;
- ► $0 \leq r \leq 3$;
- ► $0 \leq s \leq 3$;
- ► $t+u = 3$;
- ► $0 \leq t \leq 3$;
- ► $0 \leq u \leq 3$;

3. und deren Mischungen.

**2.** Zusammensetzung nach Anspruch 1, **dadurch gekennzeichnet, dass** der Gehalt an Si-H-Einheiten in diesem Zusatzstoff (D) kleiner oder gleich 0,15 Gew.-%, bezogen auf die Masse der POS(s), die (D) bilden, ist.

**3.** Zusammensetzung nach Anspruch 1, **dadurch gekennzeichnet, dass** die Konzentration des Haftvermittleradditivs (D) [ausgedrückt als Gew.-%, bezogen auf die Gesamtmasse der Zusammensetzung] zwischen 0,1 und 40 liegt.

**4.** Die Zusammensetzung nach Anspruch 1, **gekennzeichnet durch** eine Lagerstabilität von mindestens 6 Monaten Lagerung in Umgebungsatmosphäre, wobei die Lagerstabilität definiert ist als der Zeitpunkt, zu dem sich die Viskosität der geprüften Zusammensetzung verdoppelt hat.

**5.** Zusammensetzung nach Anspruch 1, **dadurch gekennzeichnet, dass** das Haftvermittleradditiv (D) mindestens einen Photoinitiator umfasst.

**6.** Zusammensetzung nach Anspruch 1, **gekennzeichnet durch** ein Molverhältnis Si-H / Si-Alkenyl, so dass :
$1{,}0 \leq$ Si-H/Si-Alkenyl $\leq 7$.

**7.** Die Zusammensetzung nach Anspruch 1, **dadurch gekennzeichnet, dass** A mindestens ein alkenyliertes Silikonöl umfasst, ausgewählt aus der Gruppe bestehend aus mindestens einem linearen POS mit mindestens zwei siliziumgebundenen Alkenylgruppen pro Molekül,

- der durchschnittlichen linearen Formel: $M^w_r(D)_q(D^w)_{q'}M_{r'}$, worin M und D Siloxyeinheiten der Formel (I.1) sind,

mit für M: a=0, b=3, für $M^w$: a=1, b=2 und für D: a=0, b=2, $D^w$: a=1, b=1; q und q' sind natürliche Zahlen, r,r'=0, 1 oder 2 mit r+r' =2;
- der Viskosität v4 (in mPa·s bei 25°C), die wie folgt definiert ist:
$75 \leq v4 \leq 4.000$,
- und das Massenverhältnis $R^w$ (Gew.-%) der Si-Alkenyl-Einheiten zur Gesamtmasse des POS von A wie folgt definiert ist:
$0{,}1 \leq R^w \leq 3{,}5$,
wobei die Viskosität v4 eine dynamische Viskosität bei 25°C ist, die mit einem ausreichend niedrigen Scherratengradienten gemessen wird, so dass die gemessene Viskosität unabhängig vom Geschwindigkeitsgradient ist.

**8.** Zusammensetzung nach Anspruch 1, **dadurch gekennzeichnet, dass** das vernetzende Silikonöl B umfasst:

- mindestens ein POS (B1) der folgenden durchschnittlichen linearen Formel:
$M_\alpha M'_\beta D_\gamma D'_\delta$
mit

• $M = (R^1)_3SiO_{1/2}$
• $M' = H_a(R^1)_bSiO_{1/2}$, a+b=3, a=1,2 oder 3, b=0 bis 3
• $D = (R^2)_2SiO_{2/2}$
• $D' = HR^3SiO_{2/2}$
• $R^1$, $R^2$, $R^3$ unabhängig voneinander mit der gleichen Definition wie die Gruppe Z der Formel (I.1)
• $\alpha$ = 0 bis 2, $\beta$= 2 bis 0,$\delta + \gamma$ zwischen 10 und 200,

► mit einer Viskosität v5 (in mPa·s bei 25°C), die wie folgt definiert ist:
$5 \leq v5 \leq 500$,
► und mit einem Si-H-Titer (Gew.-% bezogen auf diese POS B1), der wie folgt definiert ist:
$5 \leq \text{Si-H} \leq 46$,

- und/oder mindestens eine verzweigte POS (B2) der folgenden Durchschnittsformel:
$M'_hQ_k$
mit

• $M' = H_a(R^1)_bSiO_{1/2}$, a+b=3, a=1,2 oder 3, b=0 bis 3
• $Q = SiO_{4/2}$
• $4 \leq h \leq 20$ $1 \leq k \leq 4$ oder 5

► mit einer Viskosität v5 (in mPa·s bei 25°C), die wie folgt definiert ist:
$5 \leq v5' \leq 100$;
► und mit einem Si-H-Titer (Gew.-% bezogen auf diese POS B2), der wie folgt definiert ist:
$15 \leq \text{Si-H} \leq 40$,

wobei die Viskosität v5 eine dynamische Viskosität bei 25°C ist, die mit einem ausreichend niedrigen Scherratengradienten gemessen wird, so dass die gemessene Viskosität unabhängig vom Geschwindigkeitsgradient ist.

**9.** Zusammensetzung nach einem der vorstehenden Ansprüche, **dadurch gekennzeichnet, dass** sie mindestens ein ko-Haftvermittleradditiv ($D_{bis}$) umfasst, ausgewählt aus funktionellen Epoxysilanen.

**10.** Zusammensetzung nach einem der vorstehenden Ansprüche, **gekennzeichnet durch** eine Viskosität v (in mPa·s bei 25°C), die wie folgt definiert ist:
$100 \leq v \leq 3.000$,
wobei die Viskosität v eine dynamische Viskosität bei 25°C ist, die mit einem ausreichend niedrigen Scherratengradienten gemessen wird, so dass die gemessene Viskosität unabhängig vom Geschwindigkeitsgradient ist.

**11.** Verwendung eines epoxidierten Silikonöls, umfassend mindestens ein PolyOrganosiloxan (POS), umfassend:

◦ Einheiten (I.2) der Formel:

$$Y_c Z_d^1 SiO_{\frac{4-(c+d)}{2}} \quad (I.2)$$

◦ gegebenenfalls Einheiten (I.3) der Formel

$$Z_e^2 SiO_{\frac{4-e}{2}} \quad (I.3)$$

◦ gegebenenfalls Einheiten (I.4) der Formel

$$Y'_g Z_h^3 SiO_{\frac{4-(g+h)}{2}} \quad (I.4)$$

◦ gegebenenfalls Einheiten (I.5) der Formel

$$H_i Z_j^4 SiO_{\frac{4-(i+j)}{2}} \quad (I.5)$$

Formeln, in denen:

- Y unabhängig voneinander eine lineare, verzweigte oder cyclische epoxyfunktionelle Kohlenwasserstoffgruppe darstellt,
- Y' unabhängig voneinander eine alkoxyfunktionelle Gruppe darstellt;
- $Z^1$, $Z^2$, $Z^3$, $Z^4$ sind Gruppen, die die gleiche Definition wie vorstehend für die Z-Gruppen in der Legende der Formel (I.1) erfüllen,
- c ist 1 oder 2, d ist 0, 1 oder 2 und c + d ist zwischen 1 und 3;
- e liegt zwischen 0 und 3;
- g ist 1 oder 2, h ist 0, 1 oder 2 und g + h ist zwischen 1 und 3;
- i ist 1 oder 2, j ist 0, 1 oder 2 und i + j ist zwischen 1 und 3;

wobei dieses Öl pro Molekül weniger als eine Si-H-Einheit umfasst;
wobei dieses Öl derart ist, dass Haftvermittleradditiv (D), das in mindestens einem der Ansprüche 1 bis 5 definiert ist, als Haftvermittleradditiv für eine polyadditionsvernetzende/vernetzende Silikonzusammensetzung, um eine wasserabweisende und antihaftende Beschichtung auf einem Substrat zu bilden.

**12.** Verfahren zur Herstellung einer wasserabweisenden und antihaftbeschichteten Beschichtung auf einem Träger, **dadurch gekennzeichnet, dass** es darin besteht, auf diesen Träger mindestens eine Schicht aus einer Silikonzusammensetzung nach einem der Ansprüche 1 bis 10 aufzubringen und sicherzustellen, dass diese Schicht vernetzt.

**13.** Verfahren zur Erhöhung der Haftung (Abriebfestigkeit) einer vernetzten/gehärteten, wasserabweisenden und antihaftbeschichteten Silikonbeschichtung, die auf einen Träger aufgebracht ist, **dadurch gekennzeichnet, dass** es darin besteht, die Beschichtung aus einer Silikonzusammensetzung nach einem der Ansprüche 1 bis 10 zu erhalten.

**14.** Flexible Träger, **dadurch gekennzeichnet, dass** er mindestens eine wasserabweisende und antihaftende Beschichtung auf Basis einer Silikonzusammensetzung nach einem der Ansprüche 1 bis 10 umfasst.

## Claims

**1.** Silicone composition capable of cross-linking/curing by polyaddition, for forming a coating which is water-repellent and non-stick on a support, characterized:

► in that it comprises:

✶ (A) an alkenylated silicone component containing at least one functional silicone oil comprising at least one PolyOrganoSiloxane (POS) comprising units of formula (1.1)

$$W_a Z_b SiO_{\frac{4-(a+b)}{2}} \qquad (I.1)$$

in which:

- W represents independently a functional alkenyl group,
- Z represents independently a monovalent hydrocarbon group, with no unfavourable effect on the activity of the catalyst, chosen from the alkyl groups having 1 to 8 carbon atoms included,
- a is 1 or 2, b is 0, 1 or 2 and a + b is comprised between 1 and 3;

✶ (B) at least one cross-linking silicone oil comprising at least one hydrogenated POS having, per molecule, at least three hydrogen atoms bound to the silicon;
✶ (C) at least one catalyst comprising at least one metal belonging to the platinum group;
(D) at least one attachment promoting additive this attachment promoting additive (D) comprising, per molecule, less than one Si-H unit;
✶ (E) optionally at least one cross-linking inhibitor;
✶ (F) optionally, an adhesion modulating system;
✶ (G) optionally, at least one diluent;
✶ (H) optionally, at least one other functional additive

**characterized in that** the attachment promoting additive (D) is chosen from the group of silicones comprising:

1. the POSs containing:

◦ units of formula (1.2):

$$Y_c Z^1_d SiO_{\frac{4-(c+d)}{2}} \qquad (I.2)$$

with c = 1 and c+d=2: $D^{epoxy}$
◦ optionally (1.2) units with c= 1 and c+d=3: $M^{epoxy}$
◦ optionally units of formula (1.3):

$$Z^2_e SiO_{\frac{4-e}{2}} \qquad (I.3)$$

with e= 2: D
◦ optionally units of formula (1.4):

$$Y'_g Z^3_h SiO_{\frac{4-(g+h)}{2}} \qquad (I.4)$$

with e= 1 and g+h=2: $D^{alkoxy}$
◦ optionally units of formula (1.5):

$$H_i Z^4_j SiO_{\frac{4-(i+j)}{2}} \qquad (I.5)$$

with i= 1 and i+j=2: D'
◦ optionally units of formula (1.5) with i= 1 and i+j=3: M' formulae in which:

- Y represents independently a linear, branched or cyclic epoxy-functional hydrocarbon group;
- Y' represents independently an alkoxy-functional group,
- $Z^1$, $Z^2$, $Z^3$, $Z^4$ are groups which correspond to the same definition as that given above for the Z groups in the legend to formula (1.1),
- c is 1 or 2, d is 0, 1 or 2 and c + d is comprised between 1 and 3;
- e is comprised between 0 and 3;
- g is 1 or 2, h is 0, 1 or 2 and g + h is comprised between 1 and 3;
- i is 1 or 2, j is 0, 1 or 2 and i + j is comprised between 1 and 3;

2. the POSs of average formula :

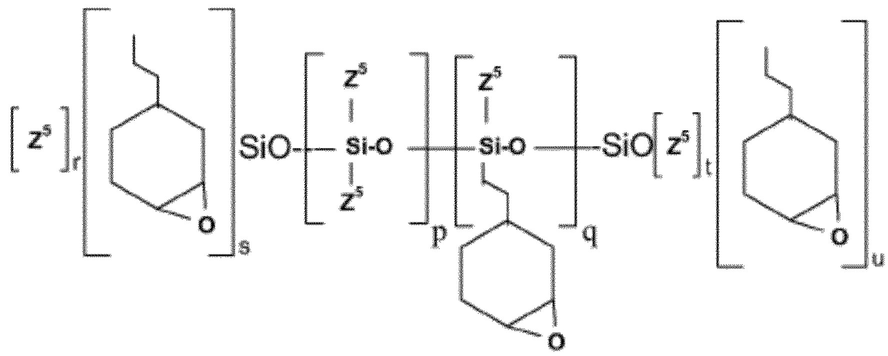

in which:

► the symbols $Z^5$ correspond to groups which are identical to or different from each other and correspond to the same definition as that given above for the Z groups in the legend to formula (1.1);
► $15 \leq p \leq 200$;
► $0 \leq q \leq 20$;
► $r + s = 3$;
► $0 \leq r \leq 3$;
► $0 \leq s \leq 3$;
► $t + u = 3$;
► $0 < t < 3$;
► $0 \leq u \leq 3$;

3. and mixtures thereof.

**2.** Composition according to claim 1, **characterized in that** the Si-H unit content of this additive (D) is less than or equal to 0.15 by weight in relation to the mass of the POS or POSs constituting (D).

**3.** Composition according to claim 1, **characterized in that** the concentration of attachment promoting additive (D) [expressed as % by weight in relation to the total mass of the composition] is comprised between 0.1 and 40.

**4.** Composition according to claim 1, **characterized by** a storage stability of at least 6 months of storage in surrounding air, the storage stability being defined as the period at the end of which the viscosity of the composition tested has doubled.

**5.** Composition according to claim 1, **characterized in that** the attachment promoting additive (D) comprises at least one photoinitiator.

**6.** Composition according to claim 1, **characterized by** an Si-H / Si-alkenyl molar ratio, such that: $1.0 \leq$ Si-H/Si-alkenyl $\leq 7$.

**7.** Composition according to claim 1, **characterized in that** A comprises at least one alkenylated silicone oil chosen from the group comprising at least one linear POS having, per molecule, at least two alkenyl groups bound to the silicon,

- of average linear formula: $M^w{}_r(D)_q(D^w)_{q'}M_{r'}$ in which M and D are siloxy units of formula (1.1) with for M: a=0, b=3, for $M^w$: a=1, b=2 and for D: a=0, b=2, $D^w$: a=1, b=1; q and q' are natural integers, r,r'=0, 1 or 2 with r+r'=2;
- of viscosity v4 (in mPa.s at 25°C) defined as follows:
$75 \leq v4 \leq 4{,}000$,
- and of mass ratio $R^w$ (% by weight) of the Si-alkenyl units to the total mass of the POS of A defined as follows:
$0.1 \leq R^w \leq 3.5$,
the viscosity v4 being a dynamic viscosity at 25°C, measured at a shear speed gradient which is sufficiently low for the viscosity measured to be independent of the speed gradient.

**8.** Composition according to claim 1, **characterized in that** the cross-linking silicone oil B comprises:

- at least one POS (B 1) of the following average linear formula:
$M_\alpha M'_\beta D_\gamma D'_\delta$
with

• $M = (R^1)_3SiO_{1/2}$
• $M' = H_a(R^1)_bSiO_{1/2}$, a+b=3, a=1,2 or 3, b=0 to 3
• $D = (R^2)_2SiO_{2/2}$
• $D' = HR^3SiO_{2/2}$
• $R^1$, $R^2$, $R^3$ corresponding independently to the same definition as the Z group of formula (1.1);
• $\alpha$ = 0 to 2, $\beta$ = 2 to 0, $\delta + \gamma$ comprised between 10 and 200;

► having a viscosity v5 (in mPa.s at 25°C) defined as follows:
$5 \leq v5 \leq 500$,
► and having an Si-H title (% by weight relative to this POS B1) defined as follows:
$5 \leq$ Si-H $\leq 46$;

- and/or at least one branched POS (B2) of the following average formula:
$M'_hQ_k$
with

• $M' = H_a(R^1)_bSiO_{1/2}$, a+b=3, a=1,2 or 3, b=0 to 3
• $Q = SiO_{4/2}$
• $4 \leq h \leq 20$; $1 \leq k \leq 4$ or 5

► having a viscosity v5 (in mPa.s at 25°C) defined as follows:
$5 \leq v5' \leq 100$, preferably $10 \leq v5' \leq 30$;
► and having an Si-H titre (% by weight relative to this POS B2) defined as follows:
$15 \leq$ Si-H $\leq 40$,

the viscosity v5 being a dynamic viscosity at 25°C, measured at a shear speed gradient which is sufficiently low for the viscosity measured to be independent of the speed gradient.

**9.** Composition according to any one of the preceding claims, **characterized in that** it comprises at least one attachment promoting co-additive (Dbis) chosen from the epoxy-functional silanes.

**10.** Composition according to any one of the preceding claims, **characterized by** a viscosity v (in mPa.s at °C) defined as follows:
$100 \leq v \leq 3{,}000$;
the viscosity v being a dynamic viscosity at 25°C, measured at a shear speed gradient which is sufficiently low for the viscosity measured to be independent of the speed gradient.

**11.** Use of an epoxidated silicone oil comprising at least one PolyOrganoSiloxane (POS) comprising:

o units of formula (1.2):

$$Y_cZ^1_dSiO_{\frac{4-(c+d)}{2}} \qquad (I.2)$$

◦ optionally units of formula (1.3):

$$Z^2_eSiO_{\frac{4-e}{2}} \qquad (I.3)$$

◦ optionally units of formula (1.4):

$$Y'_gZ^3_hSiO_{\frac{4-(g+h)}{2}} \qquad (I.4)$$

◦ optionally units of formula (1.5):

$$H_iZ^4_jSiO_{\frac{4-(i+j)}{2}} \qquad (I.5)$$

formulae in which:

- Y represents independently a linear, branched or cyclic epoxy-functional hydrocarbon group;
- Y' represents independently an alkoxy-functional group,
- $Z^1$, $Z^2$, $Z^3$, $Z^4$ are groups which correspond to the same definition as that given above for the Z groups in the legend to formula (I.1),
- c is 1 or 2, d is 0, 1 or 2 and c + d is comprised between 1 and 3;
- e is comprised between 0 and 3;
- g is 1 or 2, h is 0, 1 or 2 and g + h is comprised between 1 and 3;
- i is 1 or 2, j is 0, 1 or 2 and i + j is comprised between 1 and 3;

this oil comprising, per molecule, less than one Si-H unit;
this oil being as the attachment promoting additive (D) defined in at least one of claims 1 to 5,
as an attachment promoting additive for a silicone composition capable of crosslinking/curing by polyaddition, in order to form a water-repellent, non-stick coating on a support.

**12.** Process for producing a water-repellent and non-stick coating on a support, **characterized in that** it consists of applying to this support at least one layer of a silicone composition according to any one of claims 1 to 10, and ensuring that this layer cross-links.

**13.** Process for increasing the attachment (abrasion resistance) of a cross-linked/cured, water-repellent and non-stick silicone coating, applied to a support, **characterized in that** it consists of obtaining said coating from a silicone composition according to any one of claims 1 to 10.

**14.** Flexible support, **characterized in that** it comprises at least one water-repellent and non-stick coating based on a silicone composition according to any one of claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040161618 A
- US 5166293 A
- EP 0764702 A
- EP 1108764 A
- US 2004161618 A
- EP 0556023 A
- EP 0574264 A
- WO 9828376 A
- US 4822687 A
- US 6864311 B
- US 6291540 B
- US 5468902 B
- US 6743883 B
- US 20040048975 A
- US 4623700 A
- EP 0219720 B
- EP 0454130 A
- US 3220972 A
- US 3697473 A
- US 4340709 A
- US 3159601 A
- US 3159602 A
- EP 0057459 A
- EP 0188978 A
- EP 0190530 A
- US 3419593 A
- US 3715334 A
- US 3377432 A
- US 3814730 A
- US 4256870 A
- US 4476166 A
- US 4347346 A
- US 3989866 A
- US 4336364 A
- US 3445420 A
- FR 1528464 B
- FR 2372874 A
- FR 2450642 B
- US 3772247 B
- EP 0601938 A


### Littérature non-brevet citée dans la description


- **NOLL.** Chemistry and technology of silicones. Academic Press, 1968, 1-9